(19) Europäisches Patentamt
European Patent Office
Office européen des brevets

(11) Veröffentlichungsnummer: **0 265 372**
**A2**

(12) **EUROPÄISCHE PATENTANMELDUNG**

(21) Anmeldenummer: **87810524.6**

(22) Anmeldetag: **14.09.87**

(51) Int. Cl.⁴: **C 08 C 19/04**
C 08 F 8/06, C 08 L 45/00,
H 01 B 1/12

(30) Priorität: **19.09.86 CH 3756/86**

(43) Veröffentlichungstag der Anmeldung:
**27.04.88 Patentblatt 88/17**

(84) Benannte Vertragsstaaten:
**CH DE FR GB IT LI NL**

(71) Anmelder: **CIBA-GEIGY AG**
**Klybeckstrasse 141**
**CH-4002 Basel (CH)**

(72) Erfinder: **Tieke, Bernd, Dr.**
**Route Bel-Air 22**
**CH-1723 Marly (CH)**

**Zahir, Sheik Abdul-Cader, Dr.**
**Elsternstrasse 12**
**CH-4104 Oberwil (CH)**

(54) **Dehydriertes Polyspiroheptadien.**

(57) In organischen Lösungsmitteln unlösliches, dehydriertes Poly-(spiro[2,4]hepta-4,6-dien) mit einer elektrischen Leitfähigkeit von mindestens $10^{-10}$ S•cm$^{-1}$, enthaltend, bezogen auf die gesamte Anzahl der im Polymer wiederkehrenden Struktureinheiten, 0-90 Mol% der wiederkehrenden Struktureinheiten der Formeln I und II

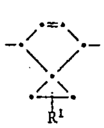 (I) und 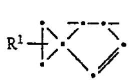 (II),

worin $R^1$ je für ein Wasserstoffatom oder ein Alkyl mit 1 bis 4 C-Atomen steht,
10-100 Mol% mindestens einer der wiederkehrenden Struktureinheiten der Formeln III bis VI

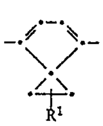 (III), 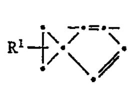 (IV),

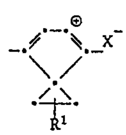 (V) und 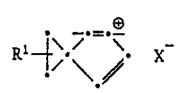 (VI),

worin $R^1$ die gleiche Bedeutung wie in Formel I oder II hat und $X^-$ für ein Brom-, Jodion, ein Anion einer Lewis- oder Protonensäure steht, wird durch Behandeln von Poly-(spiro[2,4]hepta-4,6-dien) mit Brom, Jod, Lewis- oder Protonensäure erhalten und kann als elektrisch leitfähiger Werkstoff zur Herstellung von beispielsweise Leitern, Elektroden, Batterien oder Halbleiterbauteilen verwendet werden.

EP 0 265 372 A2

**Beschreibung**

Dehydriertes Polyspiroheptadien

Die vorliegende Erfindung betrifft in organischen Lösungsmitteln unlösliches, dehydriertes Poly-(spiro[2,4]hepta-4,6-dien), Verfahren zu dessen Herstellung und dessen Verwendung, insbesondere als Halbleiter.

Aus Journal of Polymer Science, Part C, No. 4, Seiten 1335 bis 1346, ist es bekannt, dass man durch Bromierung von Polycyclopentadien unter Abspaltung von Bromwasserstoff dehydriertes Polycyclopentadien erhält, welches elektrisch leitfähig ist. Sowohl die Stabilität an der Luft als auch die elektrische Leitfähigkeit des dehydrierten Polycyclopentadiens sind ungenügend. Es ist ferner aus Journal of Polymer Science, Polymer Physics Edition, Vol. 17 (1979), Seiten 1995-2006, bekannt, dass im Poly-(spiro[2,4]hepta-4,6-dien) 1,4- und 1,2-Einhheiten

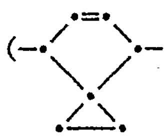 und 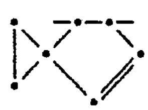 ) vorhanden sind.

Es wurde nun gefunden, dass man durch Behandeln von Poly-(spiro[2,4]hepta-4,6-dien) mit Oxidationsmitteln, wie Halogene, Lewis-oder Protonensäuren, dehydriertes Poly-(spiro[2,4]hepta-4,6-dien) mit einer besseren Leitfähigkeit und Stabilität an der Luft erhält, obwohl die Ausbildung eines planaren, konjugierten π-Systems durch die Cyclopropangruppe und den Anteil an 1,2-Einheiten im Poly-(spiro[2,4]hepta-4,6-dien) sterisch gehindert ist.

Gegenstand der vorliegenden Erfindung ist somit in organischen Lösungsmitteln unlösliches, dehydriertes Poly-(spiro[2,4]hepta-4,6-dien) mit einer elektrischen Leitfähigkeit von mindestens $10^{-10}$ S•cm$^{-1}$, enthaltend, bezogen auf die gesamte Anzahl der im Polymer wiederkehrenden Struktureinheiten, 0-90 Mol% der wiederkehrenden Struktureinheiten der Formeln I und II

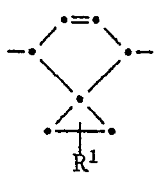 (I) und 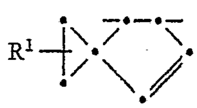 (II),

worin $R^1$ je für ein Wasserstoffatom oder ein Alkyl mit 1 bis 4 C-Atomen steht,
10-100 Mol% mindestens einer der wiederkehrenden Struktureinheiten der Formeln III bis VI

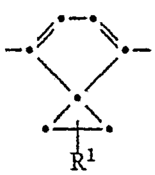 (III), 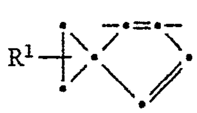 (IV),

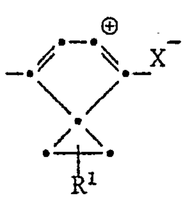 (V) und 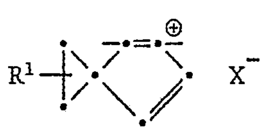 (VI) ,

worin $R^1$ die gleiche Bedeutung wie in Formel I oder II hat und X− für ein Brom-, Jodion, ein Anion einer Lewis- oder Protonensäure steht.

Vorzugsweise enthält das dehydrierte Poly-(spiro[2,4]hepta-4,6-dien) 0-80 Mol.%, insbesondere 0-70 Mol%, der wiederkehrenden Struktureinheiten der Formeln I und II und 20 - 100 Mol%, insbesondere 30-100 Mol%, mindestens einer der wiederkehrenden Struktureinheiten der Formeln III bis VI.

In einer besonderen Ausführungsform enthält das dehydrierte Poly-(spiro[2,4]hepta-4,6-dien) 0-50 Mol% der wiederkehrenden Struktureinheiten der Formeln I und II und 50-100 Mol% mindestens einer der wiederkehrenden Struktureinheiten der Formeln III bis VI.

In den Formeln I bis VI bedeutet $R^1$ vorzugsweise je ein Wasserstoffatom.

$X^-$ in den Formeln V und VI stellt vorzugsweise je ein Jodion oder ein Anion einer Lewissäure, insbesondere ein Jodion dar.

In organischen Lösungsmitteln unlösliches, dehydriertes Poly-(spiro[2,4]hepta-4,6-dien) mit den wiederkehrenden Struktureinheiten der Formeln I bis VI kann beispielsweise hergestellt werden, indem man ein Poly-(spiro[2,4]hepta-4,6-dien) mit einem mittleren Molekulargewicht von $5 \cdot 10^2$ bis $10^6$ und enthaltend die wiederkehrenden Struktureinheiten der Formeln I und II mit Brom, Jod, einer Lewissäure oder Proteinensäure als Oxidationsmittel behandelt, so dass mindestens 10 Mol% der gesamten wiederkehrenden Struktureinheiten der Formeln I und II in konjugierte Struktureinheiten der Formeln III bis VI umgewandelt sind.

Vorzugsweise setzt man bei erfindungsgemäßen Verfahren ein Poly-(spiro[2,4]hepta-4,6-dien) mit den wiederkehrenden Struktureinheiten der Formeln I und II, worin $R_1$ je für ein Wasserstoffatom steht, ein.

Geeignete Lewissäuren, welche beim erfindungsgemässen Verfahren eingesetzt werden können, sind beispielsweise $SbCl_5$, $SbF_5$, $AsF_5$, $AsCl_5$, $BiCl_5$, $BiF_5$, $BF_3$, $BCl_3$ sowie die Bromide von Phosphor und Aluminium und die Chloride von Phosphor, Aluminium, Eisen und Zinn. Vorzugsweise setzt man als Lewissäuren $SbCl_5$, $SbF_5$ und $AsF_5$ ein.

Geeignete Protonensäuren, welche beim erfindungsgemässen Verfahren eingesetzt werden können, sind organische Säuren, wie beispielsweise Methansulfonsäure, Trifluormethansulfonsäure, Benzolsulfonsäure, p-Toluolsulfonsäure, oder anorganische Säuren, wie beispielsweise Fluor-, Chlor- oder Bromwasserstoff, Sauerstoffsäuren des Stickstoffs, Chlors, Schwefels oder Phosphors sowie Komplexsäuren mit dem Anion der Formel $MX_n^-$, worin M für ein Metall oder Metalloidatom und X für ein Halogenatom, vorzugsweise Fluor oder Chlor, stehen und n 4, 5 oder 6 und um eins höher als die Wertigkeit von M ist, oder mit dem Anion der Formel $SbF_5(OH)^-$. M bedeutet vorzugsweise ein Bor-oder Wismut- und ganz besonders ein Antimon-, Arsen- oder Phosphoratom. Als Anion(en) $MX_n^-$ können in diesen Komplexsäuren beispielsweise $BiCl_6^-$ oder $BF_4^-$, aber besonders bevorzugt $PF_6^-$, $SbF_6^-$ oder $AsF_6^-$ vorliegen.

Vorzugsweise verwendet man beim erfindungsgemässen Verfahren als Oxidationsmittel Jod oder eine Lewissäure, insbesondere Jod.

Die beim erfindungsgemässen Verfahren verwendeten Oxidationsmittel werden vorzugsweise in solchen Mengen eingesetzt, dass pro Mol Monomereinheit im Poly-(spiro[2,4]hepta-4,6-dien) mindestens 1 Mol des entsprechenden Oxidationsmittels vorhanden ist.

Die Dehydrierung des Poly-(spiro[2,4]hepta-4,6-diens) kann sowohl in Lösung, wobei man als Lösungsmittel organische, mit den Oxidationsmitteln nichtreagierende Lösungsmittel, wie beispielsweise Tetrachlorkohlenstoff, Chloroform, Cyclohexan, 1,2-Dichlorethan, Benzol oder Toluol, einsetzt, oder in fester Form, beispielsweise als Film oder Beschichtung vorliegend, durchgeführt werden.

Das nach dem erfindungsgemässen Verfahren erhaltene dehydrierte Poly-(spiro[2,4]hepta-4,6-dien) ist eine in organischen Lösungsmitteln unlösliche, feste, dunkel bis schwarz gefärbte Substanz mit einer elektrischen Leitfähigkeit von mindestens $10^{-10}$ $S \cdot cm^{-1}$. Vorzugsweise weist das erfindungsgemässe, dehydrierte Poly-(spiro[2,4]hepta-4,6-dien) eine elektrische Leitfähigkeit von mindestens $10^{-9}$, insbesondere von $10^{-8}$ $S \cdot cm^{-1}$ auf. Das erfindungsgemässe, dehydrierte Poly-(spiro[2,4]hepta-4,6-dien) kann als elektrisch leitfähiger Werkstoff zur Herstellung von Leitern, Elektroden, Batterien, Schaltern, Halbleiterbauteilen, sowie bei der antistatischen Ausrüstung oder der elektromagnetischen Abschirmung von elektronischen Bauteilen eingesetzt werden.

In vorteilhafter Weise wird das dehydrierte Poly-(spiro[2,4]hepta-4,6-dien) zusammen mit in organischen Lösungsmitteln löslichen Polymeren, vorzugsweise in Form von elektrisch leitenden Filmen oder Beschichtungen, als elektrisch leitfähiger Werkstoff verarbeitet.

Gegenstand vorliegender Erfindung sind somit auch Zusammensetzungen, enthaltend dehydriertes Poly-(spiro[2,4]hepta-4,6-dien) und in einem organischen Lösungsmittel lösliches Polymer.

Solche Zusammensetzungen können beispielsweise hergestellt werden, indem man Mischungen aus Poly-(spiro[2,4]hepta-4,6-dien) und einem in einem organischen Lösungsmittel löslichen Polymer, vorzugsweise zusammen in Form von Filmen oder Beschichtungen vorliegend, mit einem oben angegebenen Oxidationsmittel behandelt. Man kann aber auch dehydriertes Poly-(spiro[2,4]hepta-4,6-dien), biespielsweise in Pulverform vorliegend, dem entsprechenden Polymer in der Schmelze oder in Form von Lösungen zugeben, um die Zusammensetzung zu erhalten.

Vorzugsweise enthalten die Zusammensetzungen mindestens 10 Gew.-%, insbesondere mindestens 25 Gew.-%, dehydriertes Poly-(spiro[2,4]hepta-4,6-dien), bezogen auf das Gesamtgewicht aus dehydriertem Poly-(spiro[2,4]hepta-4,6-dien) und in organischen Lösungsmitteln löslichem Polymer, wie beispielsweise ein Polycyclopentadien oder ein Phenylindanreste enthaltendes Polyimid.

Unter in organischen Lösungsmitteln lösliche Polymere sind in Zusammenhang mit der vorliegenden Erfindung solche Polymere zu verstehen, die eine Löslichkeit von mindestens 10 g Polymer pro Liter organisches Lösungsmittel, vorzugsweise mindestens 20 g Polymer pro Liter organisches Lösungsmittel, aufweisen.

Vorzugsweise enthalten die erfindungsgemässen Zusammensetzungen als in organischen Lösungsmitteln lösliche Polymere ein Polycyclopentadien oder ein Phenylindanreste enthaltendes Polyimid.

Das in der erfindungsgemässen Zusammensetzung enthaltene Polycyclopentadien ist bekannt und kann beispielsweise nach dem in Journal of Polymer Science, Polym. Chem. Ed., 11 (1973) 1917, beschriebenen Verfahren hergestellt werden, indem man Cyclopentadien unter Verwendung von $TiCl_4$ als kationischen

Katalysator polymerisiert. Im allgemeinen verwendet man für die Zusammensetzungen ein Polycyclopentadien mit einem durchschnittlichen Molekulargewicht von 500 bis 1 000 000.

Als Lösungsmittel kann für Polycyclopentadien beispielsweise Dioxan, Tetrahydrofuran, Chlorbenzol, 1,2-Dichloräthan, Dichlormethan, Chloroform, Toluol oder Benzol verwenden.

Als in organischen Lösungsmitteln lösliche, einen Phenylindanrest enthaltende Polyimide eignen sich solche, worin mindestens 10 Mol% der wiederkehrenden Struktureinheiten einen Phenylindanrest enthalten. Solche Polyimide werden im DE-Patent 24 46 383 offenbart und bestehen im wesentlichen aus der wiederkehrenden Einheit der Formel

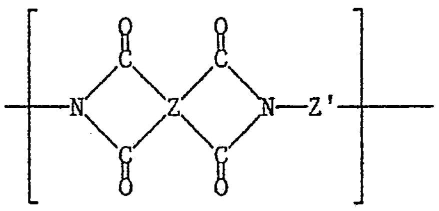 ,

worin die vier Carbonylgruppen an verschiedene Kohlenstoffatome gebunden sind un je zwei Carbonylgruppen in ortho- oder peri-Stellung zueinander stehen,
Z einen vierwertigen Rest bedeutet, der mindestens einen aromatischen Ring enthält und
Z' einen zweiwertigen organischen Rest darstellt, ausgewählt unter aromatischen, aliphatischen, alkylaromatischen,
cycloaliphatischen und heterocyclischen Resten, Kombinationen davon und Resten mit Sauerstoff, Schwefel, Stickstoff, Silicium oder Phosphor enthaltenden Brückengruppen
mit der Massgabe, dass

1) aus der Gesamtzahl der wiederkehrenden Polyimid-Einheiten

A) in 0 bis 100 Mol-% solche Einheiten Z einen Phenylindanrest der Strukturformel

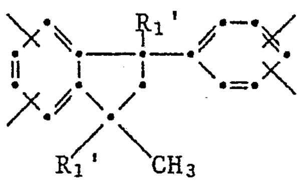

ist, worin $R_1'$ Wasserstoff oder einen Alkylrest mit 1 bis 5 Kohlenstoffatomen bedeutet, und

B) in 0 bis 100 Mol-% solcher Einheiten Z' ein Phenylindanrest der Strukturformel

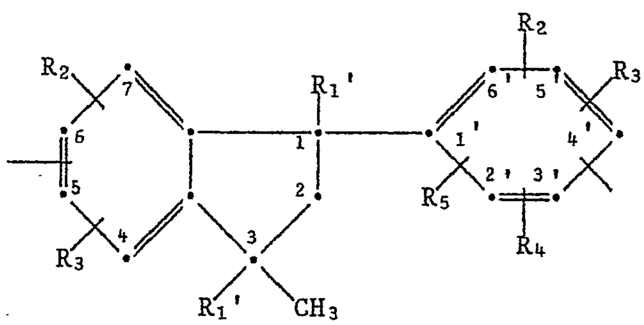

ist, worin
$R_1'$ Wasserstoff oder eine Alkylgruppe mit 1 bis 5 Kohlenstoffatomen darstellt und
$R_2$, $R_3$, $R_4$ und $R_5$ unabhängig voneinander Wasserstoff, Halogen oder Alkylgruppen mit 1 bis 4 Kohlenstoffatomen bedeuten und

2) aus der Gesamtzahl der Reste Z und Z' mindestens 10 Mol-% Phenylindanreste sind.

Bezüglich der Herstellung und der bevorzugten Bereiche dieser Polyimide wird auf die Beschreibung dieser Patentschrift verwiesen.

Als organische Lösungsmittel für die löslichen Polyimide sind beispielsweise zu nennen: N,N-Dimethylformamid, N,N-Dimethylacetamid, N-Methyl-2-pyrrolidon, N,N-Dimethylformamid, N,N-Diethylacetamid, N-Methylcaprolactam, Dioxan, Dimethylsulfoxyd, Tetramethylharnstoff, Pyridin, Dimethylsulfon, Hexamethylphosphoramid, Tetramethylensulfon, Formamid, N-Methylformamid, γ-Butyrolacton, Tetrahydrofuran, m-Kresol, Phenol, 2-Methoxyethylacetat, 1,2-Dimethoxyethan, Bis-(2-methoxyethyl)ether, Chloroform, Nitrobenzol.

Die erfindungsgemässen Zusammensetzungen eignen sich zur Herstellung selbsttragender elektrisch leitfähiger Filme mit hoher Glasumwandlungstemperatur und Reissfestigkeit. Solche Filme können auf dem Gebiet der Elektronik bzw. der Mikroelektronik Anwendung finden, beispielsweise als leitfähige Verbundwerkstoffe bei der Herstellung von elektrischen Leitern, Elektroden, Batterien, Schaltern oder Halbleiterbauteilen, sowie bei der antistatischen Ausrüstung oder der elektromagnetischen Abschirmung von elektronischen Bauteilen.

Die in den folgenden Beispielen verwendeten Polyspiroheptadiene (PSHD) A, B und C wurden nach Literaturvorschriften hergestellt. PSHD-A und PSHD-B wurden nach O. Ohara et al., J. Polym. Sci., Polym. Chem. Ed. 11 (1973) 1917, und PSHD-C wurde nach S. Hayashi et al., J. Polym. Sci., Polym. Phys. Ed. 17 (1979) 1995 synthetisiert.

Tabelle 1: Polyspiroheptadien - Verwendete Initiatoren und Charakterisierung der Proben.

| PSHD | Initiator | Ausbeute | 1,4-Gehalt *1) in [%] | C, H gef. *2) | $\overline{Mn}$ *3) |
|---|---|---|---|---|---|
| A | $TiCl_4$ | 98 % | 52,0 | C=90,20 %<br>H= 8,60 % | 62.000 |
| B | $TiCl_4$/<br>$CCl_3COOH$ | 98 % | 35,1 | C=91,04 %<br>H= 8,92 % | 14.000 |
| C | $\phi_3C^+BF_4^-$ | 65 % | 69,6 | C=89,26 %<br>H= 8,91 % | 4.300 |

*1) $^1$H-NMR-spektroskopisch ermittelt

*2) $C_{ber.}$=91,25 %, $H_{ber.}$=8,75 %

*3) Zahlenmittelwert des Molekulargewichts, durch Viskosimetrie bestimmt nach $[\eta] = 4,5 \times 10^{-9}\ \overline{M}_n^{\ 1.71}$ (T = 30°C; Toluol), [S. Hayashi et al., J. Polymer Sci. Polym. Phys. Ed. 17 (1979) 1995]

Beispiel 1:

In einem Dreihalskolben mit Rührer, Rückflusskühler und Tropftrichter werden unter $N_2$ 4,61 g PSHD-A [50 mmol pro Monomereinheit] in 100 ml trockenem $CCl_4$ gelöst. In den Tropftrichter wird eine Lösung von 7,99 g [50 mmol] $Br_2$ in 20 ml $CCl_4$ gegeben. Unter Rühren wird nun bei konstant gehaltener Temperatur von 20° C die Bromlösung zugetropft. Es entsteht ein gelblicher Niederschlag. Nach beendetem Zutropfen wird 18 Stunden unter Rühren am Rückfluss gekocht. Der Niederschlag färbt sich allmählich dunkel. Anschliessend wird abgekühlt und der Niederschlag in einer Stickstoffatmosphäre abgesaugt. Es wird noch dreimal mit je 50 ml $CCl_4$ nachgespühlt. Das Produkt wird im Hochvakuum bei 30° C getrocknet.
Ausbeute: 8,1 g eines schwarzen, unlöslichen Pulvers. Spezif. Leitfähigkeit $\sigma$: siehe Tabelle 2.
Elementaranalyse: Gefunden C:45,78 %, H: 3,92 %, Br: 43,49 %.

Beispiel 2:

In einem Dreihalskolben mit Rührer, Rückflusskühler und Tropftrichter werden unter $N_2$ 1,84 g PSHD-A [20 mmol pro Monomereinheit] in 100 ml trockenem $CCl_4$ gelöst. In den Tropftrichter wird eine Lösung von 5,07 g [20 mmol] $J_2$ in 200 ml $CCl_4$ gegeben. Unter Rühren wird nun bei konstant gehaltener Temperatur von 20° C die Jodlösung zugetropft. Nach kurzer Zeit entsteht ein violettschwarzer Niederschlag. Nach beendetem Zutropfen wird 18 Stunden unter Rühren am Rückfluss gekocht und das Produkt wie in Beispiel 1 beschrieben aufgearbeitet.
Ausbeute: 4,6 g eines schwarzen, unlöslichen Pulvers.
Spezifische Leitfähigkeit $\sigma$: siehe Tabelle 2.
Elementaranalyse: Gefunden C: 34,17 %, H: 3,19 %, J: 59,68 %.

Tabelle 2: Spezifische Leitfähigkeit σ der dehydrierten PSHD nach verschiedenen Lagerzeiten

| Probe aus Beispiel | σ[S•cm$^{-1}$]* | | |
|---|---|---|---|
| | direkt nach Synthese | nach 10 Tagen | nach 4 Wochen |
| 1 | $1,4 \times 10^{-6}$ | ** | ** |
| 2 | $1,9 \times 10^{-6}$ | $1,9 \times 10^{-6}$ | $2,0 \times 10^{-6}$ |
| 3 | $1,1 \times 10^{-6}$ | $1,2 \times 10^{-6}$ | $1,3 \times 10^{-6}$ |
| 4 | $7,8 \times 10^{-7}$ | $2,6 \times 10^{-6}$ | $4,6 \times 10^{-6}$ |
| 5 | $1,8 \times 10^{-5}$ | $3,5 \times 10^{-5}$ | $3,3 \times 10^{-5}$ |
| 6 | $1,6 \times 10^{-6}$ | ** | ** |
| 7 | $2,1 \times 10^{-8}$ | $8,0 \times 10^{-7}$ | $1,6 \times 10^{-6}$ |
| 8 | $1,1 \times 10^{-5}$ | $7,6 \times 10^{-7}$ | $1,6 \times 10^{-6}$ |

* σ gemessen an Pulver-Presslingen bei Raumtemperatur
** nicht gemessen

Beispiel 3:

Es wird wie in Beispiel 2 verfahren. Anstelle des PSHD-A wird PSHD-B verwendet.
Ausbeute: 4,6 g eines schwarzen, unlöslichen Pulvers.
Spezifische Leitfähigkeit σ: siehe Tabelle 2.
Elementaranalyse: Gefunden: C: 35,18 %, H: 2,94 %, J: 58,90 %.

Beispiel 4:

Es wird wie in Beispiel 2 verfahren. Anstelle des PSHD-A wird PSHD-B verwendet.
Ausbeute: 4,3 g eines schwarzen, unlöslichen Pulvers.
Spezifische Leitfähigkeit σ: siehe Tabelle 2.
Elementaranalyse: Gefunden: C: 32,01 %, H: 3,02 %, J: 63,03 %.

Beispiel 5:

Es wird wie in Beispiel 2 verfahren. In Abänderung werden 12,70 g [50 mmol] $J_2$ in 500 ml $CCl_4$ zugetropft.
Ausbeute: 6,3 g eines schwarzen, unlöslichen Pulvers.
Spezifische Leitfähigkeit σ: siehe Tabelle 2.
Elementaranalyse: Gefunden: C: 26,22 %, H: 2,48 %, J: 67,99 %.

Beispiel 6:

In einem Dreihalskolben mit Rührer, Rückflusskühler und Tropftrichter werden unter $N_2$ 1,84 g PSHD-A [20 mmol Monomereinheit] in 150 ml über $P_2O_5$ getrocknetem Cyclohexan gelöst. In den Tropftrichter wird eine Mischung aus 1,45 ml [20 mmol] $SbF_5$ und 20 ml über $P_2O_5$ getrocknetem Cyclohexan gegeben. Unter Rühren wird nun bei konstant gehaltener Temperatur von 20° C die $SbF_5$-Mischung zugetropft. Es entsteht sofort ein schwarzer Niederschlag. Nach beendetem Zutropfen wird noch eine Stunde weitergerührt. Dann wird das Produkt in einer Stickstoffatmosphäre abgesaugt. Es wird dreimal mit trockenem Cyclohexan nachgespült. Das Produkt wird dann im Hochvakuum bei 30° C getrocknet.
Ausbeute: 4 g eines schwarzen, unlöslichen Pulvers.
Spezifische Leitfähigkeit σ: siehe Tabelle 2:
Elementaranalyse: Gefunden: C: 16,19 %, H: 2,86 %, Sb: 47,90 %, F:17,01 %.

Beispiel 7:

In einem Dreihalskolben mit Rührer, Rückflusskühler und Tropftrichter werden unter $N_2$ 1,84 g PSHD-A [20 mmol Monomereinheit] in 150 ml trockenem $CCl_4$ gelöst. In den Tropftrichter wird eine Lösung von 5,98 g [20 mmol] $SbCl_5$ in 20 ml $CCl_4$ gegeben. Unter Rühren wird nun bei konstant gehaltener Temperatur von 20° C die $SbCl_5$-Lösung zugetropft. Es entsteht sofort ein tiefbrauner Niederschlag. Nach beendetem Zutropfen wird noch 18 Stunden unter Rückfluss gekocht und das Produkt wie in Beispiel 1 beschrieben aufgearbeitet
Ausbeute: 4,7 g eines schwarzen, unlöslichen Pulvers.
Spezifische Leitfähigkeit σ: siehe Tabelle 2.
Elementaranalyse: Gefunden: C: 34,86 %, H: 2,98 %, Cl: 31,30 %

Beispiel 8:

Es wird wie in Beispiel 7 verfahren. In Abwandlung werden 11,96 g [40 mmol] $SbCl_5$ in 15 ml $CCl_4$ zugetropft.
Ausbeute: 5,9 g eines schwarzen, unlöslichen Pulvers.
Spezifische Leitfähigkeit σ: siehe Tabelle 2.
Elementaranalyse: Gefunden: C: 31,59 %, H: 2,03 %, Cl: 33,54 %, Sb: 28,6 %

Beispiel 9:

In einem gut getrockneten, mit Argon gespülten 700 ml-Gefäss, das mit einem Rührer ausgerüstet ist, werden 1,0 g $J_2$-Kristalle vorgelegt. In das Gefäss werden nun mit PSHD-A beschichtete Glasträger[1] gegeben (Filmdicke ca. 1 µm). Die PSHD-Filme nehmen nach etwa 1 Stunde eine braune Farbe an. Nach etwa 10 Stunden sind sie völlig schwarz und weisen eine metallische Reflektion auf.
Gewichtszunahme nach 21 Stunden: 3,89 mg Jod/mg Polymer
$\sigma_{(RT)}$ (nach 21 Stunden $2{,}4 \times 10^{-6} S \cdot cm^{-1}$ (gemessen an Pulver-Presslingen).
[1] Die Beschichtung erfolgte durch Spin-Coating (Konzentration der PSHD-Lösung: 0,1 g/ml Toluol; Drehgeschwindigkeiten: 30 sec. bei 1200 U/min und anschliessend 30 sec. bei 3000 U/min).

Beispiel 10:

Es wird wie in Beispiel 9 verfahren. In Abänderung wird ein Glasträger verwendet, der mit einer Polymermischung aus PSHD-A und DAPI-Polyimid mit der folgenden wiederkehrenden Struktureinheit:

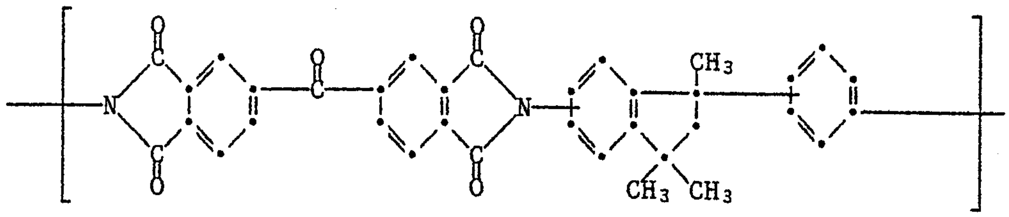

und einer inhärenten Viskosität von 0,84 dl/g, gemessen bei 25°C in N-Methylpyrrolidon, beschichtet ist. Die Beschichtung erfolgt durch Spin-Coating (Konzentration der Polymerlösung: 0,1 g Mischung/ml 1,2-Dichloräthan; Drehgeschwindigkeit: 30 sec. bei 1200 U/min und anschliessend 30 sec. bei 3000 U/min). Die Zusammensetzung der Polymermischungen und die charakteristischen Eigenschaften der jodbehandelten Filme sind aus Tabelle 3 ersichtlich.

Tabelle 3:

Zusammensetzung der Mischfilme aus PSHD und DAPI-Polyimid sowie ihre charakteristischen Eigenschaften nach Jodbehandlung

| Anteil des im Mischfilm enthaltenen PSHD [Gew.-%] | Gewichtszunahme nach 47 h [mg Jod/mg Polymermischung] | σRT [$S \cdot cm^{-1}$] |
|---|---|---|
| 10 | 0,37 | $2{,}2 \times 10^{-9}$ |
| 25 | 0,76 | $2{,}8 \times 10^{-8}$ |
| 75 | 1,83 | $1{,}1 \times 10^{-6}$ |
| 90 | 2,18 | $1{,}7 \times 10^{-6}$ |

Beispiel 11:

Es wird wie in Beispiel 9 verfahren. In Abwandlung werden Glasträger verwendet, die mit einem Mischfilm aus Polycyclopentadien und PSHD-A im Gewichtsverhältnis 1:1 (Dicke etwa 15 µm) beschichtet[2] sind.
[2] Die Beschichtung erfolgt durch Auftragen der Polymerlösung (4 g Mischung/30 ml Toluol) mittels einer 100 µ-Rakel.
Die Mischfilme nehmen nach ca. 1 Stunde eine braune Farbe an. Nach 24 Stunden sind sie völlig schwarz und weisen eine metallische Reflektion auf.
Spezifische Leitfähigkeit: $\sigma_{RT}$ (nach 48 h): $6{,}1 \times 10^{-5} S \cdot cm^{-1}$ (gemessen an Pulver-Presslingen).
Das oben verwendete Polycyclopentadien wurden unter Verwendung von $TiCl_4$ als kationischem Initiator

analog zur Arbeitsvorschrift für die Herstellung von Polyspiroheptadien in J. Polymer Sci., Polym. Chem. Ed., 11 (1973) 1917 synthetisiert.
Ausbeute: 74 % d.Th. 1,4-Gehalt ≧ 99 % (NMR-spektroskopisch bestimmt). Molekulargewicht 28.300 (viskosimetrisch bestimmt).
Elementaranalyse:
Gefunden: C 89,77 %, H 9,03 %; Berechnet: C 90,85 %, H 9,15 %

## Patentansprüche

1. In organischen Lösungsmitteln unlösliches, dehydriertes Poly-(spiro[2,4]hepta-4,6-dien) mit einer elektrischen Leitfähigkeit von mindestens $10^{-10}$ S•cm$^{-1}$, enthaltend, bezogen auf die gesamte Anzahl der im Polymer wiederkehrenden Struktureinheiten, 0-90 Mol% der wiederkehrenden Struktureinheiten der Formeln I und II

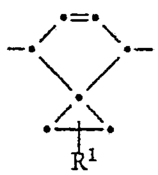 (I) und 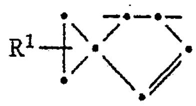 (II),

worin $R^1$ je für ein Wasserstoffatom oder ein Alkyl mit 1 bis 4 C-Atomen steht,
10-100 Mol% mindestens einer der wiederkehrenden Struktureinheiten der Formeln III bis VI

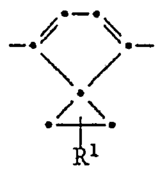 (III), 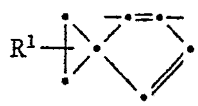 (IV),

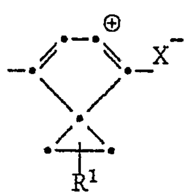 (V) und 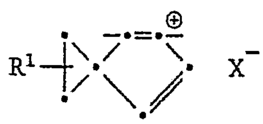 (VI) ,

worin $R^1$ die gleiche Bedeutung wie in Formel I oder II hat und $X^-$ für ein Brom-, Jodion, ein Anion einer Lewis- oder Protonensäure steht.

2. Dehydriertes Poly-(spiro[2,4]hepta-4,6-dien) gemäss Anspruch 1, enthaltend 0-80 Mol% der wiederkehrenden Struktureinheiten der Formeln I und II und 20 - 100 Mol% mindestens einer der wiederkehrenden Struktureinheiten der Formeln III bis VI.

3. Dehydriertes Poly-(spiro[2,4]hepta-4,6-dien) gemäss Anspruch 1, enthaltend 0-50 Mol% der wiederkehrenden Struktureinheiten der Formeln I und II und 50-100 Mol% mindestens einer der wiederkehrenden Struktureinheiten der Formeln V bis VIII.

4. Verfahren zur Herstellung von in organischen Lösungsmitteln unlöslichem, dehydriertem Poly-(spiro[2,4]hepta-4,6-dien) mit den wiederkehrenden Struktureinheiten der Formeln I bis VI gemäss Anspruch 1, dadurch gekennzeichnet, dass man ein Poly-(spiro[2,4]hepta-4,6-dien) mit einem mittleren Molekulargewicht von $5 \cdot 10^2$ bis $10^6$ mit Brom, Jod, Lewissäuren oder Protonensäuren als Oxidationsmittel behandelt, so dass mindestens 10 Mol% der gesamten wiederkehrenden Struktureinheiten der Formel I und II in konjugierte wiederkehrende Struktureinheiten der Formeln III bis IV gemäss Anspruch 1 umgewandelt sind.

5. Verfahren gemäss Anspruch 4, dadurch gekennzeichnet, dass man als Oxidationsmittel Jod oder eine Lewissäure verwendet.

6. Verfahren gemäss Anspruch 4, dadurch gekennzeichnet, dass man als Oxidationsmittel Jod verwendet.

7. Zusammensetzungen, enthaltend ein dehydriertes Poly-(spiro[2,4]hepta-4,6-dien) gemäss Anspruch 1 und ein in organischen Lösungsmitteln lösliches Polymer.

8. Zusammensetzungen gemäss Anspruch 7, dadurch gekennzeichnet, dass das in organischen Lösungsmitteln lösliche Polymer ein Polycyclopentadien ist.

9. Zusammensetzungen gemäss Anspruch 7, dadurch gekennzeichnet, dass das in organischen Lösungsmitteln lösliche Polymer ein Phenylindanreste enthaltendes Polyimid ist.